# EUROPEAN PATENT APPLICATION

(11) **EP 1 816 596 A1**
(43) Date of publication of application: **08.08.2007**
(21) Application number: 07100979.9
(22) Date of filing: 23.01.2007
(51) Int. Cl.: G06Q 30/00

(54) **Federation and attestation of online reputations**

(30) Priority: 01.02.2006 US 345163
(71) Applicant: NOVELL, INC., Provo, Utah 84606-6194 (US)
(72) Inventor: Carter, Stephen R., Spanish Fork, UT 84660 (US); Burch, Lloyd Leon, Payson, UT 84651 (US)
(74) Representative: Hanna, Peter William Derek

(57) **Abstract**

Techniques for federating and for attesting to online reputations are provided. An online reputation is a numerical representation of a reliability or risk factor associated with the performance of an online transaction involving a particular principal. A principal is a specific type of online resource that has one or more identities where each identity is capable of having one or more reputations. A variety of reputation sources supply (320) portions of reputation information about a principal. The portions arc aggregated (330) and optionally weighted (332) to form a summary of reputation information. The summary is then represented as an attestation (350) and optionally signed (351) by the service providing the attestation.

## Description

### Field

The invention relates generally to identity-related data processing and more particularly to techniques for federating and attesting to online reputations of identities.

### Background

In everyday life it is apparent that an individual's reputation has a substantial impact on how others perceive, treat, and interact with that individual. As an example, one often hears the phrase "watch out for him..." or "you can trust her with your life," *etc.* Often, an individual will strive to gain a specific reputation for specific reasons. For example, a credit score may reflect a person's honesty, dependability, and loan risk. If an individual wants to borrow money, the credit score should be carefully nurtured before requesting a loan in order to ensure an as favorable "credit score" reputation as possible.

The idea of reputation has evolved in the online community. For example, some online communicates have and use concepts of reputations as it specifically pertains to their community. eBay® is a good example of one such online community. In eBay®, a group member includes a "feedback score." The feedback score includes an integer number representing those that have left this particular member positive feedback, another number for neutral feedback, and still another number for negative feedback. The numbers are added together to give a total feedback score that is depicted as an integer number and as a percentage; the percentage representing the portion of positive feedback relative to the total feedback.

So, if an individual had 10 other members that rated him/her, where 7 were positive and 3 were negative. This particular individual would have a feedback score of 10 (70%); 10 total members left ratings and 7 of the 10 were positive. Reputation information is not only maintained by eBay® but it is also globally available to all members of the community to evaluate, so that each eBay® member may make their own judgment call as to whether there is a desire to do business with another eBay® member. An online reputation may therefore be a numerical representation of a reliability or risk factor associated with the performance of an online transaction involving a particular principal.

One problem with the eBay® scenario and others like eBay® is that an individual's reputation begins and ends within the "garden walls" of the eBay® community. So, an individual may have a terrible reputation within one community, such as eBay® but a great reputation within another community, such as Amazon®. If that same individual is new to a transaction within still another community, such as Overstock®, then an existing member of Overstock® does not have reliable information to access whether the transaction is worth the risk to the existing member.

Another problem with self-contained online reputations is that some individuals who have unfavorable reputations will create bogus identities within the community and masquerade as a different individual. So, the same person may have two entirely separate reputations and unsuspecting members of the community have their risk evaluation polluted, unknown to them. This technique of two separate identities may also be used to inflate an individual's reputation, such that one identity is used to aggrandize the reputation of the other identity.

So, online reputations suffer from being self-contained to the communities to which they relate and from potential subterfuge.

Thus, improved techniques are desirable to permit online reputations to be useful across communities and to limit subterfuge.

### Summary

The present invention provides methods, systems and computer programs for federating and attesting to online reputations of identities, in accordance with claims which follow. More specifically, and in an embodiment, a method for attesting to a reputation is provided. A request for advice on a reputation of a principal is received. The reputation information on the principal is acquired and an attestation is assembled that summarizes the reputation information. Further, the attestation is supplied to the requestor.

### Brief Description of the Drawings

FIG. 1 is a diagram of a method for attesting to a reputation, according to an example embodiment.

FIG. 2 is a diagram of method for weighting and modifying a reputation, according to an example embodiment.

FIG. 3 is a diagram of a method for federating reputation information for a principal, according to an example embodiment.

FIG. 4 is a diagram of a reputation federation and attestation system, according to an example embodiment.

### Detailed Description

A "resource" includes a user, content, a processing device, a node, a service, a system, a directory, a data store, groups of users, combinations of these things, *etc.* A "principal" is a specific type of resource that has one or more identities where each identity is capable of having one or more reputations. A primary persona is an identity of a principal for which all the other identities of the principal may be associated. In a sense, the primary persona is a "true identity" for any given principal.

A reputation includes a variety of reputation information. Reputation information may be segmented, categorized, and expressed in a variety of manners. For example, a portion of the reputation information may be associated with a specific classification or category, such as "photography." The same portion may be expressed in a numeric or textual manner to indicate a value along a scale associated with that category, such as "8" on a scale of 1-10. So, a portion of a particular reputation may be represented as the number "8" to indicate that the principal associated with the reputation is fairly savvy in photograph, assuming 1 is a beginning photographer and 10 is an expert photographer. The same principal representation may include other categories and values.

Thus, it is to be understood that any formal representation may be used to depict and present the reputation as reputation information, such that the reputation itself may be expressed as a single value or string or as a more complex hierarchical set of component values or strings. The reputation may also be expressed as an attestation and signed by the principal or service providing the attestation. The details of this will be discussed more completely herein and below.

In an embodiment, the techniques presented herein are at least partially implemented as enhancements to an identity service. The identity service has a trusted relationship with the other principals of the network and may be enhanced to provide a novel mechanism for federating and/or attesting to online reputations. Examples of identity services which may be enhanced with the teachings presented herein may be found in our European patent applications EP-A-1,560,394 ("Techniques for Dynamically Establishing and Managing Authentication and Trust Relationships"), EP-A-1,560,100 ("Techniques for Establishing and Managing a Distributed Credential Store"), and EP-A-1,562,100 ("Techniques for Dynamically Establishing and Managing Trust Relationships").

Various embodiments of this invention can be implemented in existing network architectures. For example, in some embodiments, the techniques presented herein are implemented in whole or in part in the Novell® network and proxy server products, email products, operating system products, and/or directory services products distributed by Novell®, Inc., of Provo, Utah.

Of course, the embodiments of the invention can be implemented in a variety of architectural platforms, operating and server systems, or applications. Any particular architectural layout or implementation presented herein is provided for purposes of illustration and comprehension only and is not intended to limit aspects of the invention.

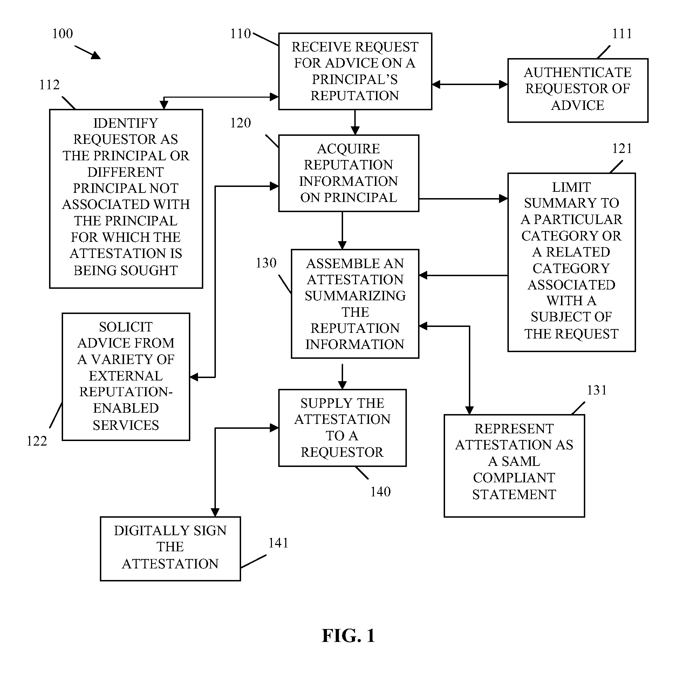

FIG. 1 is a diagram of a method 100 for attesting to a reputation, according to an example embodiment. The method 100 (hereinafter "reputation attestation service") is implemented in a machine-accessible and readable medium. The reputation attestation service is operational over and processes within a network. The network may be wired, wireless, or a combination of wired and wireless.

The reputation attestation service may be implemented as an enhancement within an identity service, such as the identity services discussed above. Alternatively, the reputation attestation service may be interfaced to an identity service or may be an entirely separate service that does not necessarily interact with an identity service at all.

As will be discussed in detail below, the reputation attestation service processes requests from requestors (principals) for attestations about a particular principal's reputation. These attestations may be relied upon by other services based on the reputation and identity of the reputation attestation service. In fact, a different instance of the reputation attestation service may actually provide a reputation attestation for another instance of the reputation attestation service. The processing of the reputation attestation service is now described within the context of and reference to the FIG. 1.

At 110, the reputation attestation service receives a request for advice on a particular principal's reputation. In some cases, if the requestor is not already authenticated and trusted to the reputation attestation service, then, at 111, the requestor supplying the request for advice is authenticated to interact with the reputation attestation service and to receive a reputation attestation for the principal in question.

According to an embodiment, at 112, the requestor may in fact be identified as the principal for whom the reputation advice is being sought. It should also be noted that the requestor may be an entirely different principal that is not associated with principal for whom the reputation advice is being sought. So, the requestor may be seeking advice on its own reputation or may be seeking advice on the reputation of some different principal.

At 120, the reputation attestation service acquires reputation information about or on the principal for whom the reputation advice is being sought. This can be achieved using a variety of filtering and collecting mechanisms.

For example, at 121, the reputation attestation service may limit a summary associated with the reputation advice being sought to a particular category or related category that is defined or derived from a subject of the original request for advice. So, if the request is coming from an online photograph domain, the reputation attestation service may, based on policy, decide that the reputation advice should be restricted to reputations associated with online purchasing and with photography. Online purchasing may be viewed as a related category and photography may be viewed as a primary category. The subject (photography) was derived in this example from the requestor's domain, which accompanied the request as metadata. It should be pointed out that in other examples the subject may be part of the original request. The processing at 121 provides an illustration for filtering reputation information or categorizing the reputation information.

In another example, at 122, the reputation attestation service may collect reputation information from a variety of external and potentially disparate reputation-enabled sources. A reputation-enabled source may be a data repository that can be queried with the proper security clearances or may be another online service, such as an identity service, another instance of a reputation attestation service, an online community service, *etc.* The reputation attestation service may utilize multiple different types of reputation-enabled sources when collecting the reputation information. The processing at 122 provides an illustration for collecting reputation information.

The reputation information that is collected and potentially filtered may also be organized in a variety of manners. For example, consider an online photography community where members evaluate the quality of a photograph on a scale of 1-5; 1 being terrible and 5 being terrific. Any particular member may have two aspects to his/her reputation within that particular community; the first portion is related to the quality of the member's evaluation of the photographs and the other is the perceived quality of the member with respect to group interactions. So, the reputation may be based on attributes of the member's evaluation skills and attributes of the member in general within the community. For example, in eBay® the feedback score has two components one associated with raw evaluations received for a member and the other a percentage of positive evaluations relative to the total evaluations received for the member. So, the reputation information may be more than just a single attribute or data point it may be multifaceted or multidimensional and such structure or semantic meaning may be specific to the reputation source supplying that portion of the reputation information to the reputation attestation service.

Once the reputation attestation service has acquired the reputation information and performed any desired filtering, at 130, the reputation information may be assembled or organized for purposes of generating a reputation attestation, summarizes the relevant reputation information to satisfy the initial request for reputation advice about the principal in question.

According to an embodiment, at 131, the reputation attestation service may represent the reputation attestation as in a Security Assertion Markup Language (SAML) compliant statement. This permits SAML-enabled services to automatically consume and digest the reputation attestation. It is to be pointed out that other assertion data formats may be used as well without departing from the teachings presented herein.

At 140, the reputation attestation service supplies the reputation attestation to the requestor who initially requested the reputation advice about the principal. In an embodiment, at 141, the reputation attestation service may also digitally sign the attestation so as to further validate the attestation.

The requestor may then use the reputation attestation with other services that recognize the reputation attestation service. As was mentioned above, the reputation attestation may be weighed by consuming principals or entities based on the reputation of the reputation attestation service.

It is also worth noting that the reputation attestation service may weight portions of the reputation information it receives from the external reputation sources based on a variety of factors, one of which may be the reputation of the external reputation sources.

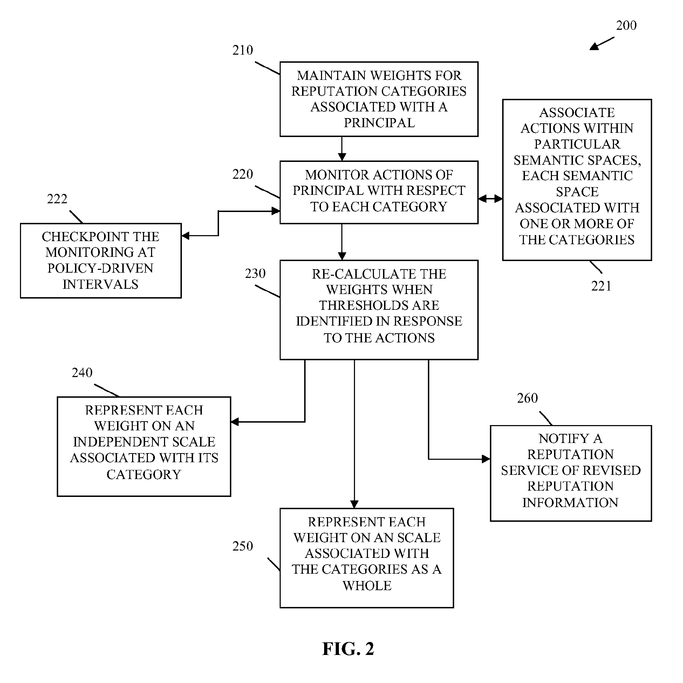

FIG. 2 is a diagram of method 200 for weighting and modifying a reputation, according to an example embodiment. The method 200 (hereinafter "reputation weighting and modifying service" is implemented in a machine-accessible and readable medium and is operational over a network. The network may be wired, wireless, or a combination of wired and wireless. According to an embodiment, the reputation weighting and modifying service interacts with the reputation attestation service represented by the method 100 to complement and enhances the attestations generated about reputations for principals. The enhancement is achieved via dynamic weighting and modification to reputation information associated with a principal.

At 210, the reputation weighting and modifying service actively maintains weights for reputation categories associated with a principal. That is, any particular reputation for any given principal is multidimensional and associated with multiple categories. For example, a principal may have a reputation for software engineering and a reputation for photography. Each portion or category associated with a principal is maintained and managed by the reputation weighting and modifying service using weights or any other type of scoring mechanism.

At 220, the reputation weighting and modifying service monitors actions of any given principal with respect to each of the categories associated with that principal's reputation information. This monitoring may be active, such as when the reputation weighting and modifying service is enabled to trap and detect actions taken by a principal or the monitoring may be more passive, such as when the reputation weighting and modifying service periodically requests information from other services about actions of the principal or such as when the reputation weighting and modifying service periodically evaluates logs or histories associated with actions of the principal. In some cases, the monitoring may also be achieved by the services or the principal pushing actions taken to the reputation weighting and modifying service.

According to an embodiment, at 221, the reputation weighting and modifying service may associate actions taken by the principal within particular semantic spaces with one or more categories of the reputation for that principal. In other words, the categories defined or being monitored for a given principal within the reputation information may map to known semantic spaces over a network. So, as one example, a photography category may map to website activity for photo processing, photo sharing, photo magazines, photo chat rooms, photo online communities, *etc*. These sites within the network may be monitored for activity of the principal.

In some embodiments, at 222, the reputation weighting and modifying service may periodically checkpoint the monitoring activities at policy-driven intervals. So, every 2 days the reputation weighting and modifying service may actively mine the network, semantic spaces, the environment of a principal, and the like for actions of the principal as they relate to the categories defined or being used in the reputation information for that principal. These temporal intervals may be defined by policy. The intervals may be on demand as well; that is, policy may permit mining to occur when instructed by an appropriate authorized principal or to occur based on a defined event or condition being raised or satisfied.

It should also be noted that the categories or classifications included within a particular principal's reputation does not have to be static. That is, new classifications may be added based on the monitoring in a dynamic and real-time fashion. Similarly, existing classifications or categories may be dynamically and in real time removed for the reputation information in response to the monitoring activities of the reputation weighting and modifying service.

At 230, reputation weighting and modifying service re-calculates weights or scores associated with the categories of the reputation information when thresholds are identified. So, if a particular principal has now performed at least 10 photography transactions and received at least 10 feedback ratings within a photography online community, then this circumstance may be identified as a threshold such that weights associated with the principal's overall reputation or weights only associated with the photography category necessitate re-calculations. It should be pointed out that the threshold may have components that span multiple areas for any given category. Thus, in the prior example, if a principal performed at least 10 photography transactions within an online photography community and subscribes to at least 2 photography related publications then a threshold with respect to photography may be deemed to have been reached.

In an embodiment, at 240, the weights may be contained within the reputation information and relative to a specific category within the reputation information. So, a weight for photograph may exist and relate just to the photography category and another weight for software engineering may exist and relate just to software engineering.

It may also be the case, at 250, that the weights may be based on a scale that is associated with all the categories within the reputation information as a whole or with respect to select classifications of categories within the reputation information. So, a weight for one category may be relative to a weight associated with an entirely different category.

A hybrid approach may be used as well, where hierarchies of weights are supplied for the categories, where local weights are used for scaling within a given category and where global weights are used for scaling across selective groupings of the categories or the categories as a whole.

In an embodiment, at 260, the reputation weighting and modifying service may notify a reputation service of revised reputation information. Notification may be given after a request for it is made (on demand) or it may be pushed to the reputation service based on policy.

The reputation weighting and modifying service manages reputation information for a given principal by monitoring actions of the principal. Categories may be created, deleted, or modified in response to actions of the principal over time. Each category may also be weighted within its own subject area and/or across and relative to other categories and their subject areas. The reputation weighting and modifying service permits a principal's reputation to evolve or morph over time in response to actions taken by the principal.

In an embodiment, the reputation weighting and modifying service is more sophisticated and capable of detecting patterns associated with the thresholds for purposes of readjusting weights for a given principal. For example, consider a member (principal) X of an online photography community, where X indicates that most ofX's technical expertise is in technical evaluation of photography rather than artistic impact of photography. Over the course of time, it is noted that as X evaluates photographs, X tends to vote with other members that claim to be savvy in "artistic impact." The reputation that X believes is not a strong point "artistic evaluation." may actually be re-weighted as a pattern emerges suggesting that X is actually more artistic than X would like to believe. So, the reputation weighting and modifying service may detect and note patterns and associate those patterns with thresholds or template patterns to make decisions as to whether certain categories associated with a principal's reputation are to be re-weighted or strengthened within the overall reputation of the principal. These patterns develop over the course of time as the principal takes actions for purposes of pursuing interests or conducting affairs of the principal over the network.

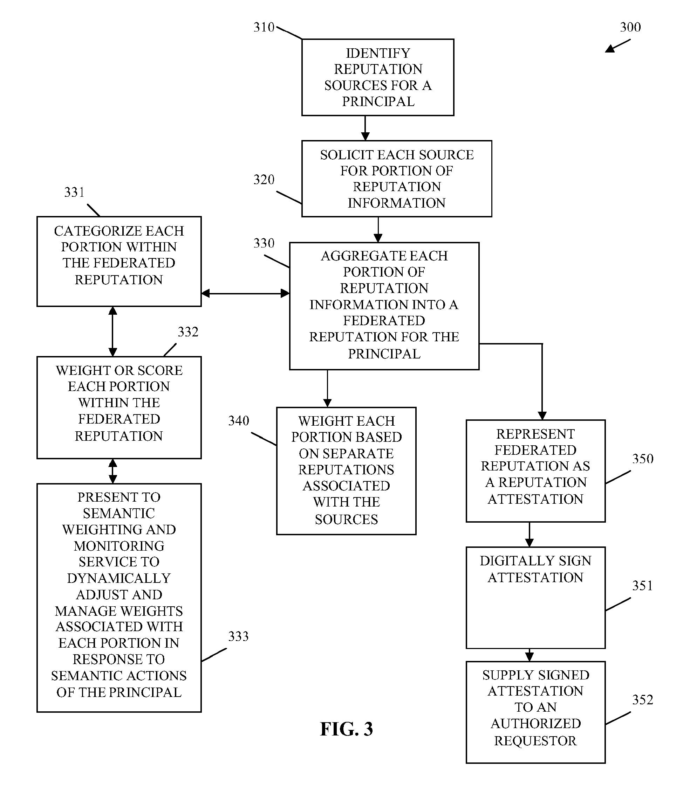

FIG. 3 is a diagram of a method 300 for federating reputation information for a principal, according to an example embodiment. The method 300 (hereinafter "reputation federation service" is implemented in a machine-accessible and readable medium and is operational over a network. The network may be wired, wireless, or a combination of wired and wireless. In an embodiment, the reputation federation service represents another complimentary service to the reputation attestation service and to the reputation weighting and modifying service represented by the methods 100 and 200 of the FIGS. 1 and 2, respectively. That is, the reputation federation service provides an added-value service by aggregating reputation information from a plurality of sources for any given principal.

The reputation federation service summarizes reputation information for services that consume reputation information. The reputation federation service, as will be seen below, may also perform a variety of value-added interpretation or filtering of the reputation information within the reputation summaries.

At 310, the reputation federation service identifies reputation sources for a principal. Again, the reputation sources may be data stores or other services, such as an identity service, an online community, a reputation-enabled service (*e.g.*, the reputation attestation service represented by the method 100 of the FIG. 1, the reputation weighting and modifying service represented by the method 200 of the FIG. 2, *etc*.), and others. The identity or reference to these reputation sources may be maintained in a list associated with a particular principal and the list may be dynamically modified (expanded or contracted).

At 320, the reputation federation service solicits each reputation source for a portion of reputation information that that particular reputation sources has for the given principal. So, if one reputation source was eBay® the reputation federation service solicits eBay® for a feedback score on a given member of eBay that is also associated with the principal. The mapping between various identities that a given principal may have and that principal's true persona may be acquired via an identity service, such as the identity services discussed above.

At 330, the reputation federation service aggregates each portion of reputation information into a federated reputation for the principal. So, each reputation source may be associated with a given schema that the reputation federation service evaluates for purposes of permitting the reputation federation service to process a given portion of reputation information. An overall schema associated with the federated reputation may then be used to federate the reputation into a desired format and structure.

According to an embodiment, at 331, the reputation federation service may categorize each portion within the federated reputation. That is, and as was described above, a reputation may be multifaceted and multidimensional and can include multiple different aspects associated with any given principal's existence. At 332, each of these categories may be weighted or scored within the federated reputation. In one technique, at 333, the weightings may be received after presenting a request to a semantic weighting and monitoring service, such as the one represented by the method 200 of the FIG. 2. The weights received may be based on semantic actions of the principal in question within semantic spaces that relate to each of the categories included in the federated reputation.

In an embodiment, at 340, the reputation federation service may also weight each portion of reputation information included in the federated reputation based on a separate reputation associated with the supplying reputation source. That is, a reputation is often judged on the merits of the entity that supplies the reputation. So, a rating from consumer reports (reputation source) about a car (principal) would hold more independent an unbiased value than a rating received from Ford Motor Company (another reputation source) about one of its own cars (another principal). The potential bias or lack of perceived expertise of a particular reputation source may be reflected within the federated reputation via a weighting scheme. Thus, the reputation federation service is capable of accounting and adjusting portions of the federated reputation with weights to reflect a perceived value of a given reputation source.

In some cases, the reputation federation service may also perform actions similar to the reputation attestation service represented by the method 100 of the FIG. 1. So, the reputation federation service may be integrated within such a service as an enhancement or may be a separate interfaced service providing enhancements to an instance of the reputation federation service. Accordingly and in an embodiment, at 350, the reputation federation service may represent the federated reputation as a reputation attestation. The reputation federation service may also sign that attestation, at 351, and supply the signed attestation, at 352, to an authorized requestor.

The methods 100, 200, and 300 demonstrate how online reputations may be processed in an automated matter for purposes of providing useful attestations and reputation aggregations (federation) for any given principal. Moreover, the reputation information may be dynamically modified in response to actions of the principal over the course of time and the information may be structured in a useful and weighted manner.

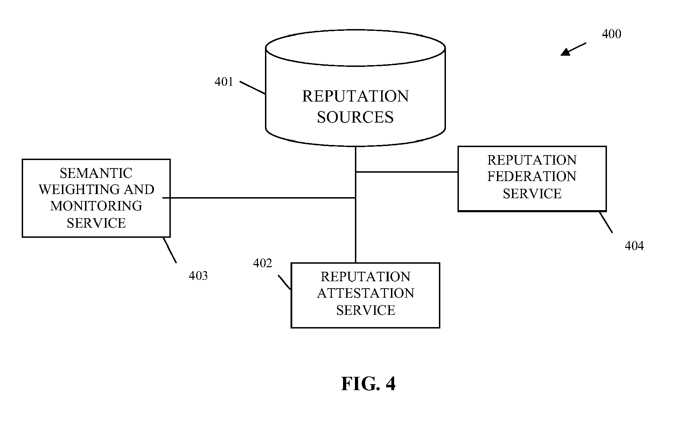

FIG. 4 is a diagram of a reputation federation and attestation system 400, according to an example embodiment. The reputation federation and attestation system 400 is implemented in a machine-accessible and readable medium and is accessed and processed over a network. The network may be wired, wireless, or a combination of wired and wireless. The reputation federation and attestation system 400 implements, among other things, the reputation attestation service represented by the method 100 of the FIG. 1, the reputation weighting and modifying service represented by the method 200 of the FIG. 2, and the reputation federation service represented by the method 300 of the FIG. 3.

The reputation federation and attestation system 400 includes a plurality of reputation sources 401 and a reputation attestation service 402. The reputation federation and attestation system 400 may also include a semantic weighting and monitoring service 403 and/or a reputation federation service 404. Each of these will now be discussed in turn.

The reputation sources 401 may include data stores or data repositories or may include other services. The services may include identity services or other reputation-enabled services. A particular reputation source 401 does not have to be aware of the existence of the other remaining reputation sources 401. Each reputation source 401 may deal with a certain category or semantic space associated with a principal or each reputation source 401 may deal with subsets of reputation categories associated with the principal. The reputation sources 401 house portions of reputation information. That information may be in a native format supported by a particular reputation source 401. The reputation sources 401 may be capable of communicating with the reputation attestation service 402 or may provides its own external Application Programming Interface (API) that the reputation attestation service 402 utilizes to acquire portions of reputation information about any given principal.

The reputation attestation service 402 consults the reputation sources 401 to acquire portions of the reputation information about a given principal. The reputation attestation service 402 assembles a reputation attestation for the principal in response to a summary of the reputation information portions.

In an embodiment, the reputation attestation service 402 weights portions of the reputation information in response to separate reputations associated with each of the plurality of reputation sources 401. So, the credibility of a particular reputation source 401 may be accounted from within the reputation attestation.

According to an embodiment, the reputation attestation service 402 may also digitally sign the reputation attestation. The signature of the reputation attestation permits consuming services of the reputation attestation to assure them as to the entity supplying the reputation attestation, which is the reputation attestation service 402.

In some cases, the reputation attestation service 402 may associate each portion of the reputation information with a value that is associated to a specific reputation category within a summary for the reputation information. The summary is then used to generate the reputation attestation. So, as has been discussed, the reputation attestation may account for multidimensional aspects of a principal. This can be done via a summary, the summary having portions representing semantic spaces or categories and each portion represented as a value.

According to an embodiment, the reputation federation and attestation system 400 may also include a semantic weighting and monitoring service 403 to interact with the reputation attestation service 402. The semantic weighting and modifying service 403 may also adjust weights associated with portions of a summary for the reputation attestation in response to semantic actions of the principal. Examples of these were presented above with the reputation weighting and modifying service represented by the method 200 of the FIG. 2.

In still another embodiment, the reputation federation and attestation system 400 may also include a reputation federation service 404. The reputation federation service 404 is to provide a summary for the portions of the reputation information to the reputation attestation service 402. Examples of reputation federation or aggregation were discussed and presented above with the reputation federation service represented by the method 300 of the FIG. 3.

It is now understood how online reputations may be federated and attested to such that a principal's reputation becomes a dynamic and multidimensional attribute about the principal. It can evolve over the life of the principal, it can be weighted more heavily depending upon the context, it can be selectively applied depending upon the context, and it can be attested to for ease of use by other consuming services.

The above description is illustrative, and not restrictive. Many other embodiments will be apparent to those of skill in the art upon reviewing the above description.

## Claims

1. A computer-implemented method (100), comprising:
receiving (110) a request for advice on a reputation of a principal, wherein a principal is a specific type of online resource that has one or more identities where each identity is capable of having one or more reputations;
acquiring (120) reputation information on the principal;
assembling (130) an attestation summarizing the reputation information; and
supplying (140) the attestation to the requestor.

2. The method of claim 1, wherein receiving (110) further includes identifying (112) the requestor as at least one of the principal and a different principal not associated with the principal for which the attestation is supplied.

3. The method of claim 1, wherein acquiring (120) further includes limiting (121) the summary of the reputation information to a category or to a related-category that is associated with or related to a subject of the request.

4. The method of claim 1, wherein acquiring (120) further includes soliciting (122) advice from a variety of external reputation-enabled services to acquire the reputation information.

5. The method of claim 1, wherein assembling (130) further includes representing (131) the attestation as a Security Assertion Markup Language (SAML) compliant statement.

6. The method of claim 1, wherein supplying (140) further includes digitally signing (141) the attestation.

7. The method of claim 1 further comprising, authenticating (111) the requestor before processing the request.

8. The method of any one of claims 1 to 7, further comprising:
maintaining (210) weights for a plurality of reputation categories associated with a principal;
monitoring (220) actions of the principal with respect to each of the reputation categories; and
re-calculating (230) the weights when thresholds are identified in response to the actions.

9. The method of claim 8 further comprising, representing (240) each of the weights on an independent scale that is relevant to its corresponding reputation category.

10. The method of claim 8 further comprising, representing (250) each of the weights on a scale that is relevant to the plurality of reputation categories as a whole.

11. The method of claim 8, wherein monitoring (220) further includes associating (221) the actions within particular semantic spaces, wherein each particular semantic space is associated or related to one or more of the reputation categories.

12. The method of claim 8, wherein monitoring (220) further includes checkpointing (222) the monitoring of actions at policy-driven intervals to determine if the thresholds are reached or being approached.

13. The method of claim 8 further comprising, notifying (260) a reputation service of revised reputation information for the principal after re-calculating (230) the weights.

14. The method of claim 1, wherein acquiring (120) comprises;
identifying (310) a plurality of reputation sources for a principal; and
soliciting (320) each reputation source for a portion of reputation information with respect to the principal;
and wherein assembling (130) comprises;
aggregating (330) each portion of reputation information into a federated reputation for the principal.

15. The method of claim 14, wherein aggregating (330) further includes categorizing (331) each portion within the federated reputation.

16. The method of claim 15 further comprising, weighting (332) or scoring each portion within the federated reputation.

17. The method of claim 15 further comprising, presenting (333) the federating reputation to a semantic reputation weighting and monitoring service for purposes of dynamically managing and adjusting weights associated with each portion of the federated reputation in response to semantic actions of the principal.

18. The method of claim 14 further comprising weighting (340) each portion within the federation reputation at least in part based on separate reputations associated with the reputation sources that supplied the portions of the reputation information.

19. The method of claim 14 further comprising:
representing (350) the federated reputation as a reputation attestation;
digitally signing (351) the reputation attestation; and
wherein supplying (140) comprises supplying (352) the signed reputation attestation to an authorized requestor.

20. A computer network system (400), comprising:
a plurality of principals, wherein a principal is a specific type of online resource that has one or more identities where each identity is capable of having one or more reputations, representing a plurality of reputation sources (401); and
a reputation attestation service (402), wherein the reputation attestation service is adapted to consult (120) each of the plurality of reputation services for portions of reputation information related to a principal, and wherein the reputation attestation service is adapted to assemble (130) a reputation attestation for the principal in response to a summary of the portions of reputation information.

21. The system of claim 20 further comprising, a semantic weighting and monitoring service (403) to interact with the reputation attestation service (402) and to supply (260) it with weights for the portions of the reputation information.

22. The system of claim 21, wherein the semantic weighting and monitoring service (403) is adapted to further adjust the weights in response to semantic actions of the principal (220,230).

23. The system of claim 20, wherein the reputation attestation service (402) is adapted to weight (340) the portions in response to separate reputations associated with each of the plurality of reputation sources (401).

24. The system of claim 20, wherein the reputation attestation service (402) is adapted to digitally sign the reputation attestation (141,351).

25. The system of claim 20 further comprising, a reputation federation service (404) adapted to provide (350) the summary of the portions to the reputation attestation service (402) and to interact directly with the plurality of reputation sources (401) on behalf of the reputation attestation service.

26. The system of claim 20, wherein the reputation attestation service (402) associates each portion with a category (121) and assigns a value for that category within the summary.

27. A computer program, which when executing on a computer or computer network, performs the method of any one of claims 1 to 19.

28. The computer program of claim 27, stored on a computer-readable storage medium.
